# DEMANDE DE BREVET EUROPEEN

(11) **EP 0 922 493 A1**
(43) Date de publication de la demande: **16.06.1999**
(21) Numéro de dépôt: 98403026.2
(22) Date de dépôt: 03.12.1998
(51) Int. Cl.: B01J 38/12, B01J 38/44, B01J 23/96

(54) **Procédé de régénération de catalyseur utilisé pour la transformation des hydrocarbures**

(30) Priorité: 08.12.1997 FR 9715467
(71) Demandeur: INSTITUT FRANCAIS DU PETROLE, 92500 Rueil Malmaison (FR)
(72) Inventeur: Deves, Jean-Marie, 78540 Vernouillet (FR); Euzen, Patrick, 92500 Rueil Malmaison (FR); Le Peltier, Fabienne, 92500 Rueil Malmaison (FR); Mabilon, Gil, 78420 Carrieres sur Seine (FR); Clause, Olivier, 78400 Chatou (FR)

(57) **Abrégé**

L'invention concerne un procédé de régénération d'un catalyseur de reformage ou de production d'hydrocarbures aromatiques, ledit catalyseur renfermant un support, au moins un métal noble, au moins un métal additionnel et ou moins un halogène, procédé comprenant une étape de combustion, puis une étape d'oxychloration suivie d'une étape de calcination, procédé dans lequel l'étape de combustion se déroule en présence d'un gaz contenant de l'oxygène et un gaz inerte, procédé caractérisé en ce que ledit gaz contient également au moins un oxyde d'azote NxOy tel que y/x>0,5, ledit procédé opérant entre 200-700°C, sous une pression de 0,1-4 Mpa, et avec une teneur molaire en oxyde d'azote dans le gaz de 0,0001-20%.

Le catalyseur concerné par l'invention est utilisé pour la transformation d'hydrocarbures en composés aromatiques, en particulier, dans les procédés de reformage catalytique des essences et dans les procédés produisant des composés aromatiques à partir d'hydrocarbures paraffiniques et naphténiques.

Le traitement selon l'invention permet de restaurer les performances initiales du catalyseur en préservant ses propriétés chimiques, texturales et mécaniques améliorant ainsi sa durée de vie.

## Description

La présente invention concerne la régénération de catalyseurs désactivés par un dépôt de matière carbonée. Ces catalyseurs sont à base d'un support d'oxyde réfractaire contenant au moins un métal noble, au moins un métal promoteur, un halogène et éventuellement un ou plusieurs éléments additionnels.
Les catalyseurs de ce type contenant, par exemple, du platine et au moins un autre métal déposés sur un support d'oxyde d'aluminium chlorée sont connus depuis longtemps et largement utilisés dans l'industrie du raffinage pour la transformation d'hydrocarbures. Ils s'utilisent en particulier dans les procédés de reformage des essences et de production d'aromatiques. Les procédés de reformage permettent d'augmenter l'indice d'octane des fractions essences provenant de la distillation du pétrole brut et/ou d'autres procédés de raffinage. Les procédés de production d'aromatiques fournissent les bases (benzène, toluène et xylènes) utilisables en pétrochimie. Ces procédés transforment les hydrocarbures paraffiniques et naphténiques en composés aromatiques. Ils revêtent un intérêt supplémentaire en contribuant à la production de quantités importantes d'hydrogène indispensable pour les procédés d'hydrotraitement de la raffinerie. Ces deux procédés se différencient par le choix des conditions opératoires et de la composition de la charge.
La charge typique traitée par ces procédés contient des hydrocarbures paraffiniques, naphténiques et aromatiques contenant de 5 à 12 atomes de carbone par molécule.
Cette charge est définie, en autres, par sa densité et sa composition pondérale. Elle présente une teneur en azote d'au plus 2000 ppm, et le plus généralement elle est d'au plus 1000 ppm ou d'au plus 200 ppm. Cette charge est mise en contact avec le catalyseur de la présente invention à une température comprise entre 400 et 700 °C.
Le débit massique de charge traitée par unité de masse de catalyseur peut varier de 0,1 à 10 kg/h/kg. La pression opératoire peut être fixée entre la pression atmosphérique et 4 MPa. Une partie de l'hydrogène produit est recyclé selon un taux de recyclage molaire compris entre 0,1 et 8,0.

En parallèle à la transformation chimique des hydrocarbures paraffiniques et naphténiques, se déroulent dans ces procédés des réactions parasites dont la formation d'un dépôt carboné sur le catalyseur. Ce dépôt carboné ou coke bloque l'accès des réactifs aux sites catalytiquement actifs. Il provoque ainsi la désactivation du catalyseur. Industriellement, il est donc nécessaire, après une certaine période de transformation des hydrocarbures, de procéder à l'élimination de ce dépôt. Ceci est réalisé lors de la régénération du catalyseur. Un catalyseur connaît ainsi durant sa durée d'utilisation globale plusieurs régénérations.

D'un point de vue procédé, ces catalyseurs sont utilisés classiquement dans des unités à plusieurs réacteurs, soit à lit fixe, soit à lit circulant. Dans le premier cas, le catalyseur est disposé en lit fixe dans chacun des réacteurs et les hydrocarbures sont convertis pendant une période de plusieurs mois. Lorsque la désactivation progressive du catalyseur par dépôt de coke devient limitarite, l'alimentation des réacteurs en hydrocarbures est arrêtée et la régénération du catalyseur est effectuée dans les réacteurs ayant servi à la transformation des hydrocarbures. Dans le deuxième cas, le catalyseur en lit mobile circule continuellement entre les réacteurs et un régénérateur dans laquelle se déroule l'élimination du coke. L'avantage de ce deuxième type de procédé est qu'il n'est pas nécessaire d'arrêter l'unité pour effectuer la régénération du catalyseur.
Dans les procédés à lit fixe, le catalyseur est régénéré en moyenne une dizaine de fois durant sa vie. Dans les procédés à lit circulant, le catalyseur subit un plus grand nombre de régénérations (plusieurs dizaines).
Une autre possibilité de régénération est applicable aux catalyseurs de ces deux types de procédés. Elle consiste à décharger le catalyseur des réacteurs et à pratiquer la régénération dans une installation distincte de l'unité de transformation des hydrocarbures. L'arrêt de l'unité de transformation des hydrocarbures ne dure ainsi que le temps du déchargement et rechargement du catalyseur. Il est, par contre, nécessaire de disposer d'une quantité double de catalyseur pour pratiquer ces régénérations ex-situ.

Quel que soit le mode de fonctionnement du catalyseur, les traitements de régénération comportent toujours au moins une étape d'élimination par combustion du coke déposé sur le catalyseur. Cette étape est généralement suivie d'une étape de traitement en présence d'oxygène et de chlore. L'étape de combustion se déroule à haute température en présence d'oxygène et conduit à la formation d'eau et d'oxydes de carbone. Malheureusement, ces conditions sont favorables à la dégradation du catalyseur, en particulier de son support. L'essentiel du vieillissement déterminant la durée de vie du catalyseur se produit durant cette étape de combustion. Ce vieillissement est d'autant plus rapide que la température et l'humidité sont élevées.

Le coke est constitué principalement de carbone. Il contient également un peu d'hydrogène. Le rapport molaire H/C varie d'environ 0,3 à 1,0. Ces éléments forment des structures poly-aromatiques condensées dont le degré d'organisation cristalline est variable en fonction de la nature du catalyseur et des conditions de fonctionnement des réacteurs. Le coke n'est pas un composé unique bien défini. Il s'agit plutôt d'un ensemble de composés dont le degré de condensation et la localisation sur la surface du catalyseur sont différents.
Bien que la sélectivité de transformation des hydrocarbures en coke soit très faible, les teneurs en coke accumulé sur le catalyseur peuvent être importantes. Typiquement, pour les unités à lit fixe, cette teneur est comprise entre 2,0 et 20,0 à 25,0% poids. Pour les unités à lit circulant, cette valeur est située entre 3,0 et 10,0% poids.

lndustriellement l'élimination du coke est réalisée par combustion contrôlée. Dans la pratique industrielle, le contrôle de cette réaction exothermique est effectué en surveillant la température du lit catalytique et en injectant de façon dosée de l'oxygène dans le courant de gaz inerte qui balaye le catalyseur.
Cette combustion de coke peut être réalisée de la pression atmosphérique à une pression relative de quelques MPa. Le domaine de température s'étend typiquement de 300 à 600°C. Le plus généralement, le gaz inerte est de l'azote et les concentrations molaires en oxygène varient de quelques centièmes de pour-cent à quelques pour-cent. Les débits habituels de gaz ramenés à 1 kg de catalyseur se situent typiquement entre 0,1 à 20,0 m³/h et les durées de combustion s'étalent de quelques heures à quelques jours.
La réaction de combustion du carbone et de l'hydrogène constituant le coke, produit du dioxyde de carbone et de l'eau. En fonction des conditions opératoires choisies, la fraction molaire en eau dans le gaz produit par la combustion, peut atteindre ou dépasser 1%. Une telle humidité à haute température accélère le vieillissement du catalyseur.

Un exemple de procédé de régénération est décrit dans le brevet EP-0.378.482, avec un catalyseur en lit mobile traversant successivement deux zones radiales de combustion, puis une zone axiale d'oxychloration et une zone axiale de calcination.

La combustion est effectuée sous une pression de 3-8 bars, à une température de 350-450°C dans la première zone et 450-490°C dans la seconde zone. Il est introduit dans la première zone, un gaz inerte renfermant 0,01 à 1% d'oxygène en volume et contenant une partie au moins du gaz issu de la seconde zone de combustion et des zones d'oxychloration et calcination, ledit gaz ayant été lavé dans une solution de soude, potasse ou équivalent de façon à ôter les impuretés chlorées. Dans la seconde zone de combustion, un apport d'oxygène permet de maintenir au contact du catalyseur un gaz renfermant 0,01 à 1% d'oxygène en volume.

Les catalyseurs utilisés sont bifonctionnels car ils associent la fonction acide de l'alumine chlorée à la fonction déshydrogénante du platine. Le second métal a pour principal effet de promouvoir l'activité déshydrogénante du platine. Dans certains cas, ce second métal ou promoteur, a également pour effet de limiter la perte de dispersion des atomes de platine à la surface du support. Cette perte de dispersion est une autre cause responsable de la désactivation du catalyseur. Un traitement d'oxychloration permet à la phase métallique de recouvrer un état de dispersion maximale. Ce traitement se déroule à une température proche de 500°C en présence d'oxygène et de chlore.

Parmi l'ensemble des métaux promoteurs étudiés, deux métaux tiennent une place prépondérante : le rhénium et l'étain. En effet, ce sont ces deux métaux qui procurent les meilleurs effets de promotion du platine. Ainsi l'utilisation de rhénium a permis, en particulier, d'accroître la stabilité du catalyseur vis-à-vis de sa désactivation par dépôt de coke. C'est ce type de catalyseur qui est utilisé le plus souvent dans les procédés à lit fixe. Et grâce à ce gain de stabilité, la durée des cycles réactionnels compris entre deux régénérations, a pu être augmentée. L'étain, quant à lui, améliore les performances de ces catalyseurs lorsqu'ils sont utilisés à basse pression. Cette amélioration conjointe à leur plus faible activité craquante, a permis d'obtenir de meilleurs rendements en reformat surtout dans les procédés à régénération continue fonctionnant à basse pression opératoire.

Les supports généralement utilisés pour préparer les catalyseurs utilisés dans l'invention, sont choisis parmi les oxydes réfractaires des métaux des groupes II, III et IV de la classification périodique des éléments. Il peut s'agir de silico-aluminates cristallisés comme les zéolithes mais le plus souvent l'oxyde d'aluminium de formule générale Al2O3, nH2O est utilisé. Sa surface spécifique est comprise entre 150 et 400 m²/g. Cet oxyde dans lequel *n* est compris entre 0 et 0.6, est classiquement obtenu par déshydratation contrôlée d'hydroxydes dans lesquels 1 ≤ *n ≤* 3 dont les plus communs sont la boehmite (*n* = 1), la gibbsite et la bayérite (*n* = 3). En fonction des conditions hydrothermiques de traitements, ces hydroxydes donnent plusieurs oxydes ou alumines de transition. On dénombre ainsi les formes ρ, γ, η, χ, θ, δ, κ et α qui se différencient essentiellement par l'organisation de leur structure cristalline. Lors de traitements thermiques en présence d'eau, ces différentes formes sont susceptibles d'évolution entre elles, selon une filiation complexe qui dépend des conditions opératoires du traitement. La forme α qui présente la densité la plus forte, une surface spécifique et une acidité presque nulles, est la plus stable à haute température. Pour les catalyseurs de reformage, l'alumine de transition de forme γ est la plus souvent employée, en raison du compromis qu'elle présente entre ses propriétés d'acidité et de stabilité thermique.
Les conditions les plus favorables à l'évolution ultérieure de cette alumine γ vers la forme α sont sans conteste les conditions oxydantes humides à haute température rencontrées lors de la combustion du coke. C'est pendant cette phase que le catalyseur connaît l'essentiel de son vieillissement. Typiquement, la surface spécifique d'un catalyseur neuf est proche de 250 m²/g. En fin de vie, cette valeur chute d'au moins 100 m²/g.
En conséquence, tout élément permettant de diminuer la sévérité de cette étape de régénération, en particulier un abaissement de la température de combustion, ne peut qu'être bénéfique à une plus grande durée de vie du catalyseur.

Ces catalyseurs se présentent sous formes d'extrudés ou de billes d'une taille suffisante de manière à laisser un passage relativement facile aux réactifs et produits gazeux. L'usure de ces catalyseurs en particulier par frottement dans les unités à lit mobile, provoque la formation de poussières et de grains plus fins. Ces grains plus fins perturbent l'écoulement gazeux et obligent à augmenter la pression d'entrée des réactifs voire, dans certains cas, à arrêter l'opération de l'unité. De plus dans les unités à lit mobile, cette usure progressive a pour conséquence de perturber la circulation du catalyseur et de nécessiter l'appoint fréquent de catalyseur neuf. La transformation graduelle de l'alumine γ du support en forme a s'accompagne d'un phénomène de densification qui diminue la cohésion mécanique de la bille ou de l'extrudé de catalyseur. Cette moindre résistance mécanique facilite l'usure par attrition. L'évolution de l'alumine γ se produit lors du passage du catalyseur en zone de combustion et est d'autant plus rapide que la température de cette combustion est importante. Donc l'usure mécanique des billes ou extrudés de catalyseur est accentuée par le vieillissement occasionné lors de la combustion du coke.

Il est donc clair que toutes les améliorations permettant de minimiser autant que possible la sévérité du traitement de combustion sont primordiales pour augmenter la durée de vie de ces catalyseurs. En particulier tout moyen permettant de diminuer la température de combustion sans, pour autant, ralentir la vitesse de combustion, est très intéressant.

Les travaux de recherche effectuées par la demanderesse l'ont conduite à découvrir que, de façon surprenante, l'étape de combustion réalisée lors de la régénération du catalyseur de reformage ou de productions d'aromatiques en présence d'au moins un composé appartenant à la famille des oxydes d'azote permet d'améliorer sensiblement la durée de vie de ces catalyseurs.

Plus précisément, l'invention concerne un procédé de régénération d'un catalyseur de reformage ou de production d'hydrocarbures aromatiques, ledit catalyseur renfermant un support, au moins un métal noble, au moins un métal additionnel et ou moins un halogène, procédé comprenant une étape de combustion, puis une étape d'oxychloration suivie d'une étape de calcination, et l'étape de combustion se déroulant en présence d'un gaz contenant de l'oxygène et un gaz inerte, procédé caractérisé en ce que ledit gaz contient également au moins un oxyde d'azote NxOy tel que y/x>0,5, ledit procédé opérant entre 200-700°C, sous une pression de 0,1-4 Mpa, et avec une teneur molaire en oxyde d'azote dans le gaz de 0,0001-20%.

Les composés de la famille des oxydes d'azote NxOy selon l'invention présentent un rapport molaire y/x supérieur ou égal à 0,5. Leurs formules chimiques sont par exemple : NO, N2O3, NO2, N2O4, N2O5, N2O6. De préférence NO ou NO2 sont employés. Ces composés sont mis en oeuvre tels quels ou sous forme de précurseur minéral ou organique. Par décomposition thermique dans les conditions de la combustion ou catalytique ou par passage dans un champ électromagnétique ou un plasma, le précurseur est susceptible de libérer au moins l'un de ces composés. Parmi ces précurseurs minéraux, on peut citer les acides et sels en solution aqueuse des anions nitrates NO3⁻ et nitrites NO2 ou encore les sels des cations nitryl NO2⁺ et nitrosyl NO⁺ ou ammonium NH4⁺. On peut aussi utiliser l'ammoniac gazeux ou en solution aqueuse. Parmi les précurseurs organiques, on peut citer à titre d'exemple les composés hydrocarbonés contenant une fonction nitro NO2, nitroso NO, ou encore amino NH2 ou ammonium NH4⁺. Le précurseur minéral ou organique peut être mis en oeuvre tel quel ou en solution dans un solvant. La quantité de précurseur introduite est calculée de façon à ce que la fraction molaire d'oxyde d'azote dans le gaz soit suffisante selon l'invention. La température de l'étape de combustion doit alors être au moins égale à la température de décomposition du précurseur en oxyde d'azote si le précurseur est introduit directement dans la zone de combustion. On peut tout aussi bien procéder à la décomposition du précurseur en-dehors de la (des) zone(s) de combustion et introduire le produit gazeux obtenu.

Le ou les composés de la famille des oxydes d'azote ou précurseurs de composés de la famille des oxydes d'azote selon l'invention peuvent être mélangés au gaz utilisé pour la combustion ou être injectés directement dans le réacteur de combustion. Ils peuvent être introduit de façon continue ou par intermittence. Ils peuvent aussi être mis en contact avec la masse à régénérer préalablement à la combustion. Cette mise en contact peut être réalisée, par exemple, par imprégnation de la masse par une solution aqueuse de sels solubles tels que les nitrates ou par passage au travers de la masse d'un flux gazeux contenant un ou des oxydes d'azote ou selon toute autre technique connue de l'homme de l'art. Dans ces cas, la température de l'étape de combustion doit être au moins égale à la température de décomposition du précurseur en oxyde d'azote.

Le traitement de combustion selon l'invention concerne un lit fixe, mobile ou fluidisé de catalyseur à régénérer. Ce lit de catalyseur peut être traversé ou léché par le gaz de combustion. Dans le premier cas, les réacteurs utilisés peuvent être traversé par un flux axial ou radial de gaz de combustion. Dans le second cas, il peut s'agir de réacteurs de type four tournant utilisé dans une régénération ex-situ.

Le gaz utilisé dans l'invention pour réaliser la combustion contient majoritairement un gaz inerte et de l'oxygène. Pour le gaz inerte vis-à-vis des réactions de combustion du coke, l'azote est préféré, mais l'utilisation d'un autre gaz inerte comme par exemple l'hélium ou l'argon est possible. La fraction molaire en oxygène peut varier de 0.001% à 40% et de préférence 0,1 à 40% ou mieux entre 0,1 et 25%. Le gaz oxydant est préférentiellement l'oxygène ou ses précurseurs. Parmi les précurseurs de l'oxygène, on peut citer à titre d'exemple l'ozone ou l'eau oxygénée. L'air est avantageusement utilisé. Dans l'éventualité où le gaz issu de l'étape de combustion est recyclé, il peut contenir à des teneurs variables d'autres composés issus de la combustion de la matière carbonée par exemple le dioxyde de carbone ou encore l'eau. Enfin ce gaz peut également contenir d'autres composés comme, par exemple, des composés halogénés ajoutés à faible quantité pour limiter la déchloration du catalyseur pendant la combustion. Mais généralement, les gaz issus de l'étape de combustion sont lavés et dans la majorité des cas séchés au moins en partie.
Le débit spécifique de ce gaz est compris entre 0,1 et 200 m³/h/kg de catalyseur. Ce débit est avantageusement choisi entre 1 et 30 m³/h/kg. La pression opératoire relative de la combustion selon l'invention varie de 0,1 à 4 MPa et de façon préférée de 0,1 à 1,5 MPa.

Quel que soit le mode d'introduction du ou des composés de la famille des oxydes d'azote ou de leurs précurseurs, la quantité introduite est exprimée sous forme de fraction molaire en oxyde d'azote par rapport au gaz en contact avec le catalyseur pour la combustion. Cette fraction molaire peut varier de 0.001% à 20% de préférence de 0.01 à 5%. Généralement, il n'y a pas besoin de teneurs élevées en oxydes d'azote dans le gaz, de 1-5000 ppm sont habituellement suffisants, ou mieux 1-2500 ppm, voire 1-1000 ppm. On a également tendance à réduire ces teneurs au dessous de 500 ppm, avantageusement 1-400 ppm ; des teneurs aussi faibles que 1-300 ppm, 1-200 ppm ou 1-100 ppm peuvent même être suffisantes.

Le domaine de température de l'étape de combustion s'étend avantageusement de 300 à 600°C avec, pour préférence, l'intervalle de température 320 à 550°C ou encore 400 à 550°C. La durée de la combustion selon l'invention varie de 0,1 à 50 h et de préférence de 0,2 à 3 h.

L'étape de combustion peut être réalisée en une ou plusieurs zones de combustion, en lit fixe ou mobile. De façon générale, l'invention peut être utilisée dans les différents procédés de régénération de catalyseur de réformage.
La présente invention s'applique aux catalyseurs mentionnés précédemment dans la description de l'art antérieur mais également aux catalyseurs contenant un silico-aluminate cristallisé comme une zéolithe, en mélange ou non avec un oxyde réfractaire comme l'alumine.

Le procédé selon l'invention présente l'avantage de réduire fortement la température de début et de fin d'oxydation de la matière organique. Il évite les transformations physico-chimiques associées aux élévations de température locale, ce qui améliore la durée de vie des catalyseurs et leurs résistance mécanique. Ainsi que le montreront les exemples, l'utilisation du procédé selon l'invention permet de réduire les températures de combustion d'au moins 20°C, et généralement d'au moins 30°C, et même d'au moins 50°C dans les exemples. On constate habituellement une diminution de 20-70°C.

Un autre avantage du procédé est son coût faible. L'introduction d'oxydes d'azote est peu onéreuse en particulier dans le cas ou ces composés sont introduits sous forme de précurseurs type acide nitrique ou solutions de nitrates, ou sous forme de gaz généré par un brûleur (combustion de gaz naturel par exemple).

Le procédé suivant l'invention peut être mis en oeuvre, très simplement, sur les unités industrielles lors des phases de régénération du catalyseur. Par exemple, NO ou l'acide nitrique peuvent être ajoutés au gaz entrant dans la zone de combustion lors de la régénération des catalyseurs de réformage pour le procédé semi-régénératif ou régénératif. De même, dans le cas des procédés à régénération séquentielle ou continue, NO ou l'acide nitrique peuvent être introduits en amont de la (des) zone(s) de combustion. Le procédé suivant l'invention peut également être mis en oeuvre pour les régénérations menées hors site, c'est-à-dire, par exemple, chez une société spécialisée dans le retraitement des catalyseurs. Il suffit également d'introduire l'agent précurseur des oxydes d'azote en amont du ou des fours de combustion, qu'ils soient en lit traversé, lit léché, bouillonnant, ou tout autre procédé connu de l'homme de l'art.

On illustrera ci-après l'invention sans toutefois en limiter la portée.

### Préparation des catalyseurs A et B

Le catalyseur A est préparé selon les techniques de l'art antérieur. Une quantité de 100 g d'un support alumine γ de surface spécifique de 210 m²/g est plongée dans 500 cm³ d'une solution aqueuse d'acide chlorhydrique. Le solide est laissé au contact de la solution pendant 3 h et puis essoré. Sur le produit séché contenant du chlore, une imprégnation de platine et de rhénium est réalisée en ajoutant au solide 600 cm³ d'une solution contenant d'acide chloroplatinique et du perrhénate d'ammonium. Le solide est laissé en contact de la solution pendant 6 h, puis séché 1 h à 120°C et enfin calciné sous air pendant 3 h à 530°C. Le catalyseur A contient 0,23% poids de platine, 0,25% poids de rhénium et 1,2% poids de chlore.
Le catalyseur B est aussi préparé selon les techniques de l'art antérieur à partir de 100 g du même support d'alumine. Après la mise en contact pendant 3 h avec 500 cm³ d'une solution aqueuse d'acide chlorhydrique, le solide est essoré. Sur le produit séché contenant du chlore, on procède alors à l'imprégnation du platine et de l'étain en ajoutant au solide 600 cm³ d'une solution d'acide hexachloroplatinique et de chlorure stannique. La mise en contact dure 6 h, le séchage 1 h à 120°C et la calcination 3 h sous air à 530°C. Le catalyseur B contient 0,25% poids de platine, 0,14% poids d'étain et 1,2% poids de chlore. La valeur de sa surface spécifique est égale à 204 m²/g.

### Désactivation des catalyseurs

Les catalyseurs A et B sont désactivés par cokage dans les conditions suivantes :
catalyseur A : 5 g de catalyseur A sont chargés dans un réacteur tubulaire isotherme et réduits sous 10 dm³/h d'hydrogène à 510°C pendant 2 h. Avant l'injection de la charge n-heptane, on procède à une étape de sulfuration pendant 1 h sous un débit de 10 dm³/h d'un mélange d'hydrogène et d'hydrogène sulfuré dans un rapport molaire de 100.
   Une charge constitué de n-heptane pur est ensuite injectée dans le réacteur en respectant les conditions opératoires suivantes:
   - température : 510°C
   - pression : 0,1 MPa
   - rapport molaire hydrogène / hydrocarbure : 0,5
   - débit massique de charge / masse de catalyseur : 2 h⁻¹
   - durée : 4 h
catalyseur B : ce catalyseur est chargé, réduit et testé dans les mêmes conditions que celles du catalyseur A, excepté qu'il n'est pas présulfuré avant l'injection de la charge.

A la fin de la période d'injection de la charge, les catalyseurs A et B contiennent respectivement 6,7 et 6,1% poids de carbone.

### EXEMPLE 1 : Traitement comparatif de régénération

5 g du catalyseur A coké sont chargés dans un réacteur tubulaire isotherme puis balayé par un débit d'azote de 50 dm³/h. La température du catalyseur est augmentée à la température de combustion. Deux essais sont réalisés : pour le premier, cette température de combustion est fixée à 420°C et pour le second à 450°C. La combustion proprement dite est alors réalisée en injectant pendant 1 h un débit de 830 dm³/h d'un mélange azote/oxygène contenant 0,7% volume d'oxygène. Les teneurs en carbone ainsi obtenues sont données dans le tableau 1.

**Tableau 1**

| | | |
|---|---|---|
| Température de combustion °C | 420 | 450 |
| Teneur en carbone % poids | 4,4 | 2,9 |

### EXEMPLE 2 Traitement de régénération selon l'invention

5 g de catalyseur A sont traités de la même manière que dans le cas précédent mais 0,417 cm³ d'acide nitrique de concentration 1 N sont ajoutés par heure au mélange azote/oxygène à 0,7% volume d'oxygène utilisé pour l'étape de combustion du coke. En admettant une décomposition complète de l'acide nitrique, la teneur en oxyde d'azote dans le gaz est alors de 200 ppmv recalculée à la température ambiante. Les teneurs en carbone rapportées dans le tableau 2 indiquent clairement un effet promoteur de l'acide nitrique sur l'efficacité de la combustion du coke.

**Tableau 2**

| | | |
|---|---|---|
| Température de combustion °C | 420 | 450 |
| Teneur en carbone % poids | 2,1 | 0,9 |

### EXEMPLE 3 Traitement comparatif de régénération cyclique

Une quantité de 9 g du catalyseur B de surface spécifique égale à 204 m²/g est chargée dans un réacteur tubulaire isotherme fonctionnant à la pression atmosphérique et adapté à la réalisation de cycles cokage et régénération dans des conditions analogues à celles du fonctionnement industriel.

pré traitement : le catalyseur est d'abord calciné à 500°C sous un débit d'air sec pendant 30 mn, puis purgé avec un balayage d'azote pendant 15 mn, et enfin réduit à 500°C pendant 1 h par un débit d'hydrogène de 9 dm³/h.

phase de cokage : 13,5 g/h de méthylcyclopentane et 0,27 dm³/h d'hydrogène sont injectés à 500°C et pendant 1 h. A l'issue de cette étape, le catalyseur contient 8,2% poids de carbone. La température est ensuite diminuée à 470°C et le réacteur est purgé sous azote.

régénération : la combustion du coke est réalisée par injection de 40 dm³/h d'un mélange azote/oxygène à 470°C pendant 2 h. La mesure dans le gaz de sortie du CO₂ produit indique que la combustion est complète dans ces conditions. Le catalyseur est ensuite soumis à un traitement oxychlorant de 1 h à 500 °C sous un débit de 9 dm³/h d'air sec dans lequel 18 mm³ de 1,2 dichloro-propane et 95 mm³ d'eau sont injectés par heure. Après l'injection de l'agent chlorant et de l'eau, le catalyseur est laissé à 500°C pendant 30 mn sous le même débit d'air sec. Après purge à l'azote du réacteur, le catalyseur est réduit selon les conditions décrites précédemment et une nouvelle phase de cokage est réalisée.

Après répétition de 50 de ces cycles, la surface spécifique mesurée sur l'échantillon de catalyseur B est égale à 175 m²/g. La baisse significative de la surface spécifique du catalyseur traduit le vieillissement du catalyseur occasionné lors de ces cycles de fonctionnement.

### EXEMPLE 4 Traitement de régénération cyclique selon l'invention

Les cycles de cokage-régénération sont réalisés successivement dans les conditions identiques à celles de l'exemple 3, excepté pour l'étape de combustion du coke qui est effectuée à la température plus basse de 420°C et avec un mélange azote/oxygène contenant en mole 200 ppm d'oxyde d'azote. L'oxyde d'azote est injecté en continu sous forme d'acide nitrique.

Après 50 cycles effectués dans ces conditions, la surface spécifique du catalyseur B régénéré selon l'invention, est égale à 194 m²/g. Cette valeur est très nettement supérieure à celle du catalyseur régénéré par la combustion de l'art antérieur décrite dans l'exemple précédent.

Ceci illustre bien l'effet promoteur des composés appartenant à la famille des oxydes d'azote sur la combustion du coke. Cet effet promoteur autorise l'utilisation d'une température de combustion plus basse, ce qui ralentit le vieillissement du catalyseur et donc augmente sa durée de vie.

## Revendications

1. Procédé de régénération d'un catalyseur de reformage ou de production d'hydrocarbures aromatiques, ledit catalyseur renfermant un support, au moins un métal noble, au moins un métal additionnel et au moins un halogène, procédé comprenant une étape de combustion, puis une étape d'oxychloration suivie d'une étape de calcination, et l'étape de combustion se déroulant en présence d'un gaz contenant de l'oxygène et un gaz inerte, procédé caractérisé en ce que ledit gaz contient également au moins un oxyde d'azote NxOy tel que y/x>0,5, ledit procédé opérant entre 200-700°C, sous une pression de 0,1-4 Mpa, et avec une teneur molaire en oxyde d'azote dans le gaz de 0,0001-20%.

2. Procédé selon la revendication 1, dans lequel l'oxyde d'azote est NO ou NO2.

3. Procédé selon l'une des revendications précédentes dans lequel, avant d'être soumise à l'étape de combustion, la masse est mise au contact d'au moins un précurseur d'oxyde d'azote, et la température de l'étape de combustion est au moins égale à la température de décomposition du précurseur en oxyde d'azote.

4. Procédé selon l'une des revendications 1 ou 2, dans lequel on introduit dans le gaz comburant au moins un précurseur d'oxyde d'azote, et la température de l'étape de combustion est au moins égale à la température de décomposition du précurseur en oxyde d'azote.

5. Procédé selon l'une des revendications 1, 3 ou 4, dans lequel ledit précurseur est choisi dans le groupe formé par les acides et les sels des anions nitrate ou nitrite, les sels des cations nitryl, nitrosyl ou ammonium, les composés hydrocarbonés contenant une fonction nitro, nitroso, amino ou ammonium, et l'ammoniac gazeux ou en solution aqueuse.

6. Procédé selon l'une des revendications précédentes, opérant à une température de 320-550°C.

7. Procédé selon l'une des revendications précédentes, dans lequel la teneur molaire en oxygène est de 0,1-40%.

8. Procédé selon l'une des revendications précédentes, dans lequel la teneur molaire en oxyde(s) d'azote est de 1-5000 ppm.

9. Procédé selon l'une des revendications précédentes, dans lequel la teneur molaire en oxyde(s) d'azote est de 1-1000 ppm.

10. Procédé selon l'une des revendications précédentes, dans lequel le catalyseur circule en lit mobile.

11. Procédé selon l'une des revendications 1 à 9, dans lequel le catalyseur est en lit fixe.
